# EUROPEAN PATENT SPECIFICATION

(11) **EP 0 817 931 B1**
(45) Date of publication and mention of the grant of the patent: **09.12.1998**
(21) Application number: 96904377.7
(22) Date of filing: 04.03.1996
(51) Int. Cl.: F16K 31/385

(54) **A GAS VALVE FOR DELIVERING A GAS PULSE**
GASVENTIL ZUR BEREITSTELLUNG EINES GASIMPULSES
SOUPAPE DE GAZ POUR EMETTRE UNE IMPULSION GAZEUSE

(30) Priority: 02.03.1995 NL 9500406
(43) Date of publication of application: 14.01.1998
(73) Proprietor: ASCO CONTROLS B.V., 3925 BD Scherpenzeel (NL)
(72) Inventor: VAN DER ZEE, Jan, NL-3925 BD Scherpenzeel (NL)
(74) Representative: Louet Feisser, Arnold
(86) International application number: NL9600099
(87) International publication number: WO9627095

(56) References cited:
- EP-A- 0 297 260
- DE-A- 2 321 102
- DE-C- 813 161
- US-A- 2 532 568

## Description

The invention relates to a gas valve comprising a valve housing having a gas inlet and a gas outlet and comprising a valve body which is located within the housing and capable of butting against a valve seat so as to close the gas valve, whereby said valve body comprises a membrane which is fixed in the valve housing at its outside edge, in such a manner that a control chamber is formed at the one side remote from the valve seat, which control chamber is connected to the gas inlet via a throttle channel, whereby at least part of the other side of the membrane is in communication with the gas inlet, and whereby means are provided for allowing gas to escape from the control chamber so as to open the gas valve, in that the gas pressure from the gas inlet on said other side of the membrane causes the valve body to move away from the valve seat, whereby said valve body further comprises a valve member which is positioned centrally with respect to said membrane, which valve member sealingly mates with the valve seat and whereby the dimension of said valve member is such that the distance between the part of the valve member mating with the valve seat and the part located near the membrane is larger than half the internal diameter of the gas inlet. A gas valve of this kind may in particular be used for delivering a gas pulse, whereby it is necessary for the gas valve to open very quickly, so that a relatively large volume of gas can be passed in a very short time.

US-A-2,532,568 discloses such gas valve whereby said valve body comprises a valve member which is positioned centrally with respect to said membrane, which valve member sealingly mates with the valve seat and whereby the dimension of said valve member is such that the distance between the part of the valve member mating with the valve seat and the part located near the membrane is larger than half the internal diameter of the gas inlet. Therefore a low flow resistance in the valve can be achieved.

Gas valves of this kind are for example used for cleaning dust filter, which become clogged with dust during their use, so that the resistance of the dust filter increases. Such a dust filter may be cleaned by applying a gas pulse in a direction opposed to the direction of the normal gas flow through the dust filter. It is important thereby that an effective gas pulse can be obtained while using a minimum amount of gas, which requires a gas valve which is capable of opening very quickly and passing a large amount of gas very quickly in a very short time.

The object of the invention is to provide a gas valve, in particular for delivering a gas pulse, which operates in a reliable and efficient manner and which is capable of opening quickly and passing a large amount of gas in a short time.

According to the invention almost the entire valve member is positioned on said other side of the membrane and said valve body, which comprises said membrane as well as said valve member, is integrally made of the same material. The valve body is preferably made of plastic material. A valve body of this type will be explained in more detail with reference to a drawing.

In a preferred embodiment of the invention the valve body is positioned substantially upstream of the valve seat. This construction makes it possible to achieve a maximum through-flow in the open position of the valve, because the entire space within the valve body is available for the flow of gas there through.

In another preferred embodiment of the invention guide means, which guide the movement of the valve member, are provided near the valve seat. In a preferred embodiment said guide means are in the shape of a plurality of bars, for example three, which are provided coaxially with the valve body, between which the valve body, at least the bottom side of the valve member, can move. In another preferred embodiment the membrane is substantially preformed in the shape of a cone, at least partially so, in such a manner that the membrane has a substantially stable form in the position in which the valve is closed or substantially closed. In practice it has become apparent that the membrane itself may thereby guide the valve member, so that additional guide means are not required.

In another preferred embodiment of the invention the edge of the membrane may be provided with at least one rib extending parallel to said edge, and preferably with several ribs, which extend on either side of said membrane and which taper off towards the outside, seen in cross-sectional view.

In another preferred embodiment of the invention the membrane may be fixed between two parts of the valve housing near its outside edge, whereby at least one part is provided with a substantially circular edge, which presses a groove into the surface of the membrane. Preferably each of said parts comprises such an edge, both edges being concentric but having different diameters.

The result of fixing the membrane between said edge or edges instead of between two parallel surfaces is that on the one hand an adequate seal between the parts of the valve housing and the membrane is effected, whilst on the other hand the pressing together of the housing parts may be less critical. According to another preferred aspect of the invention it is possible thereby to fit the two parts of the valve housing together by means of a clip connection. When a clip connection is used the two parts of the housing are not pressed together with a certain force, but they are fixed in position some distance apart. In particular the use of the aforesaid edges extending into the surface of the membrane makes it possible to use a connection this type between the parts of the valve housing.

In another preferred embodiment of the invention the one part of the valve housing may thereby comprise a number of segments of an outward circular groove, in which a substantially circular spring clip is fitted, whilst the other part of the valve housing comprises a corresponding number of segments of a circular edge, which engage behind the clip between the parts of the groove. This will be explained in more detail by means of an example.

Further preferred features of the invention, which may be used both separately and in combination with each other, will become apparent from the description of the Figures and are defined in the claims.

Hereafter some examples of embodiments of a gas valve will be described by way of illustration, whereby reference will be made to the drawing, in which:
Figure 1 is a sectional view of the gas valve;
Figure 2 is a side view of the gas valve;
Figure 3 is a plan view of the gas valve;
Figure 4 shows a detail.
Figure 5 is a detail indicated at VIII in Figure 1;
Figure 6 is a sectional view of the valve body;
Figure 7 is a detail indicated at X in Figure 6, and
Figures 8 and 9 are perspective views of the valve body.

The Figures are merely schematic representations of the embodiments, whereby like parts are numbered alike in the various Figures.

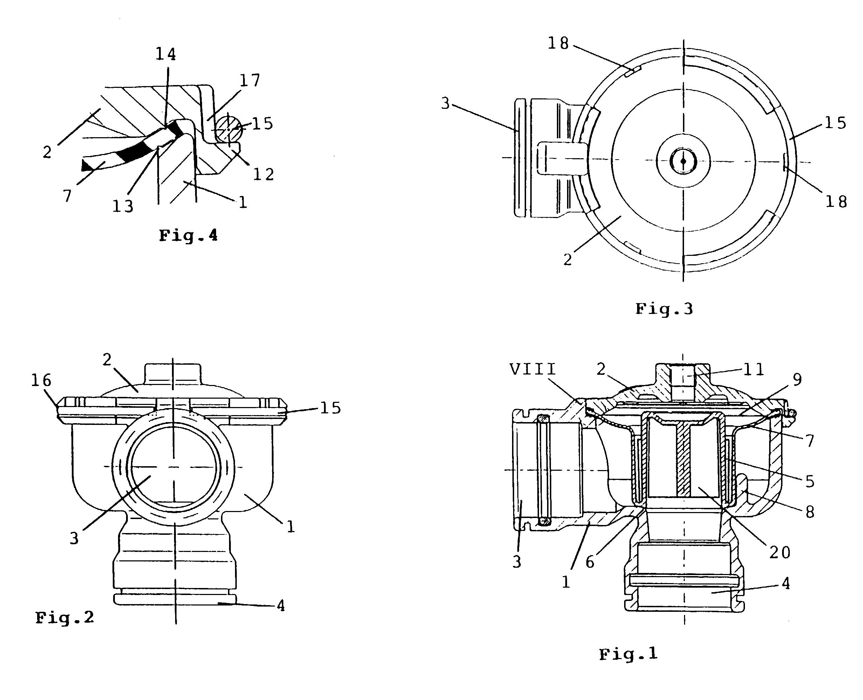

Figure 1 shows the various parts of the gas valve in sectional view. The gas valve comprises a housing which consists of a valve housing 1 and a cover 2. Valve housing 1 thereby comprises a gas inlet 3 and a gas outlet 4. Both openings are provided with connecting means, so that gas pipes can be connected thereto.

In the position of the gas valve shown in Figure 1 said gas valve is closed, in which position a valve member 5 butts against the valve seat 6. Valve seat 6 is formed in such a manner that the gas resistance is minimal in the open position of the valve. Preferably valve seat 6 is designed to have a relatively large radius thereby, and valve member 5 forms a seal thereon in such a manner that the annular mating surface between valve member 5 and valve seat 6 lies on a conical surface.

Valve member 5 is connected to a membrane 7, which is fixed between the valve housing 1 and the cover 2 at its outside edge. Membrane 7 is flexible to such an extent that valve member 5 can be lifted off valve seat 6, so that a free passage of gas from gas inlet 3 to gas outlet 4 is realized. The housing 1 is provided with three guide bars 8 (only one being shown), which guide the valve member 5 during its movement.

In the embodiment according to Figure 1 the underside of membrane 7 is in direct contact with the gas Inlet 3, so that the gas supply pressure is prevalent on this side of the membrane. A control chamber 9 is formed on the other side of the membrane 7, which control chamber 9 is connected to the gas inlet by means of a throttle channel 10. The cover 2 is furthermore provided with a connecting opening 11, via which said control chamber can be connected to a control unit (not shown). Said control unit (not shown) is capable of closing connecting opening 11, so that no gas can be displaced through connecting opening 11, whilst said control unit is furthermore capable of allowing gas to escape from control chamber 9 via connecting opening ii in order to open the gas valve.

The operation of the gas valve shown in Figure 1 is as follows. As long as the passage of gas via connecting opening 11 is blocked, the gas valve will be closed because valve member 5 butts against valve seat 2. The gas supply pressure in gas inlet 3 is thereby higher than the gas pressure in gas outlet 4. The gas supply pressure is prevalent not only in gas inlet 3 and at the bottom side of membrane 7, but also in control chamber 9, which control chamber is connected to said gas inlet by means of throttle channel 10. As long as connecting opening 11 is closed, the resultant of the forces exerted on the membrane and the valve member will be directed downwards, as a result of which the gas valve will remain closed. The gas valve can be opened by allowing gas to escape from control chamber 9 via connecting opening 11, so that the gas pressure in control chamber 9 falls out. The resultant of the force exerted on the membrane and the valve member will be directed upwards thereby. The amount of gas that can, be supplied via throttle channel 10 will thereby be insufficient to build up sufficient pressure in control chamber 9, so that the gas supply pressure prevailing at the bottom side of the membrane 7 will cause the gas valve to remain open until the discharge of gas via connecting opening 11 is stopped, so that a pressure will build up in control chamber 9 again as a result of gas being supplied to control chamber 9 via throttle channel 10, which pressure will cause the gas valve to close.

The control unit which is connected to connecting opening 11 may be a magnetic valve, which is connected directly to connecting opening 11. It is also possible for several gas valves to be controlled by a central control unit, so that a gas pipe to said central control unit is connected to connecting opening 11.

Figure 2 is a side view of the gas valve according to Figure 1, and Figure 3 is a plan view thereof.

Figure 4 shows the way in which membrane 7 is fixed between valve housing 1 and cover 2. Because said fixing does not take place in a flat plane but slightly obliquely, that is, according to the surface of a cone, the membrane is given a certain bias, which will keep the valve in its closed position when there is no pressure difference in the gas valve. Figure 4 furthermore shows that the membrane 7 is fitted between valve housing 1 and cover 2 with some play, that is, the distance between valve housing 1 and cover 2 is slightly larger than the thickness of the membrane. The fixing and sealing of the membrane thereby takes place in that valve housing 1 is provided with an edge 13 and cover 2 is provided with an edge 14, which edges are slightly pressed into the surface of membrane 7. In this manner an adequate fixation and an adequate seal are obtained with a predetermined position of cover 2 with respect to valve housing 1, without cover 2 and valve housing 1 being pressed together with a certain force.

Cover 2 is connected to valve housing 1 by means of a clip 15, which clip 15 substantially consists of a resilient annular round bar. Clip 15 is fitted in a radially outward groove 16 of the housing 1, which groove 16 comprises three segments of a circle.

In this manner cover 2 is mounted on valve body 1 in a simple but highly effective manner, whereby clip 15 is first mounted on valve housing 1, after which over 2 can be moved into position and snap down there. Furthermore cover 2 can be removed from valve housing 1 in a simple manner by removing clip 15 by means of a screwdriver, after which cover 2 can be detached from valve housing 1.

Recesses 18 are provided in order to make it possible to remove clip 15, into which recesses the end of a screwdriver can be inserted.

As is apparent in particular from Figure 1, the use of valve member 5 makes it possible to fit the valve seat centrally in the valve housing at the desired location, whilst the membrane 7 may be fitted near the cover 2, in order to obtain a control chamber having a minimum volume. The use of the valve member furthermore makes it possible to effect an optimum through-flow of the gas, because a large degree of freedom in choosing the shape of the valve seat is possible.

The valve body, which comprises membrane 7 as well as valve member 5, is integrally made of the same material, preferably of plastic material. The part of the valve body which forms membrane 7 is relatively thin-walled, in order to obtain the required flexibility, whilst the part of the valve body which forms valve member 5 has a thicker wall and is moreover provided with strengthening ribs 20.

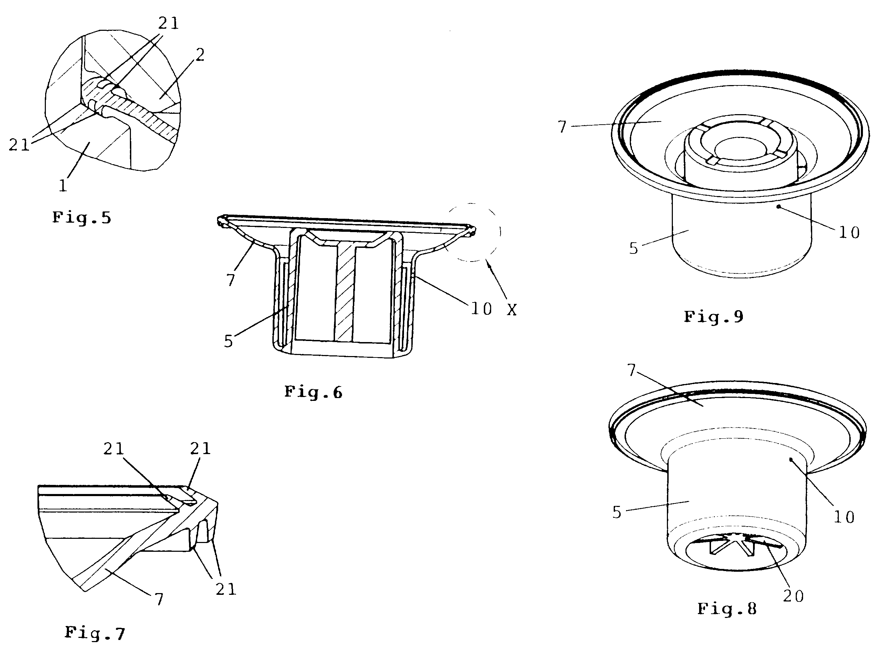

Figure 5 is a detailed view of the manner in which the circumferential edge of membrane 7 is clamped between valve housing 1 and cover 2. The edge of membrane 7 thereby fits in a chamber present between valve housing 1 and cover 2, whereby four ribs 21, two on either side of the membrane near the edge of membrane 7, are slightly deformed, so that an adequate fixation of the membrane is obtained.

Figure 6 is a sectional view of valve body 5, 7, which shows that at least part of the membrane 7 is substantially conical in its stable form. Because the valve body 5, 7 more or less has this stable form in the closed condition of the valve, it has become apparent in practice that no additional means such as guide bars 8 are required for guiding the valve member 5. Membrane 7 provides the guiding of valve member 5 during the closing of the valve.

Figure 7 is a view of the edge of membrane 7, showing the ribs 21, two on either side of the membrane. The ribs 21 are preferably obliquely oriented and tapered, seen in cross-sectional view. Figures 8 and 9 are perspective views of the valve body 5, 7, wherein the throttle channel 10 and the ribs 20 can be clearly distinguished.

The embodiments described above are to be considered as examples, and it will be apparent to those skilled in the art who have studied the invention that many variations in using the invention within the scope of the appended claims are possible.

## Claims

1. A gas valve comprising a valve housing (1,2) having a gas inlet (3) and a gas outlet (4) and comprising a valve body (5,7) which is located within the housing (1,2) and capable of butting against a valve seat (6) so as to close the gas valve, whereby said valve body (5,7) comprises a membrane (7) which is fixed in the valve housing (1,2) at its outside edge, in such a manner that a control chamber is formed at the one side remote from the valve seat (6), which control chamber (9) is connected to the gas inlet (3) via a throttle channel (10), whereby at least part of the other side of the membrane (7) is in communication with the gas inlet (3), and whereby means (11) are provided for allowing gas to escape from the control chamber (9) so as to open the gas valve, in that the gas pressure from the gas inlet (3) on said other side of the membrane (7) causes the valve body (5,7) to move away from the valve seat (6), whereby said valve body (5,7) further comprises a valve member (5) which is positioned centrally with respect to said membrane (7), which valve member (5) sealingly mates with the valve seat (6) and whereby the dimension of said valve member (5) is such that the distance between the part of the valve member (5) mating with the valve seat (6) and the part located near the membrane (7) is larger than half the internal diameter of the gas inlet (3), characterized in that almost the entire valve member (5) is positioned on said other side of the membrane (7) and that said valve body (5,7), which comprises said membrane (7) as well as said valve member (5), is integrally made of the same material.

2. A gas valve according to claim 1, characterized in that said valve body (5, 7) is positioned substantially upstream of said valve seat (6).

3. A gas valve according to any one of the preceding claims, characterized in that guide means (8), which guide the movement of said valve member (5), are provided near said valve seat (6).

4. A gas valve according to any one of the preceding claims, characterized in that said membrane (7) is substantially preformed in the shape of a cone, at least partially so, in such a manner that said membrane (7) has a substantially stable form in the position in which the valve is closed or substantially closed.

5. A gas valve according to any one of the preceding claims, characterized in that the outside edge of said membrane (7) is provided with at least one rib (21) extending parallel to said edge.

6. A gas valve according to claim 5, characterized in that ribs (21) extend on either side of said membrane (7) and taper off towards the outside, seen in cross-sectional view.

7. A gas valve according to any one of the preceding claims, characterized in that said membrane (7) is fixed between two parts (1,2) of said valve housing near its outside edge, whereby at least a portion of said housing is provided with a substantially circular edge (13,14), which presses a groove into the surface of the membrane (7).

8. A gas valve according to claim 7 characterized in that said two parts (1,2) of said valve housing are interconnected by means of a clip connection (15, 16, 17) ,

9. A gas valve according to claim 8, characterized in that said one part (1) of the valve housing comprises a number of segments of an outward circular groove (16), in which a substantially circular spring clip (15) is fitted, whilst the other part (2) of the valve housing comprises a corresponding number of segments of a circular edge (17), which engage behind the clip (15) between the parts of the groove (16).

## Patentansprüche

1. Ein Gasventil mit einem Ventilgehäuse (1,2), das eine Gaseintrittsöffnung (3) und eine Gasaustrittsöffnung (4) aufweist, und mit einem Ventilkörper (5,7), der im Gehäuse (1,2) angeordnet ist und gegen einen Ventilsitz (6) drückt zum Schließen des Gasventils, wobei besagter Ventilkörper (5,7) eine Membran (7) umfaßt, die im Ventilgehäuse (1,2) an dessen Außenkante so befestigt ist, daß eine Steuerkammer auf der einen Seite entfernt vom Ventilsitz (6) gebildet wird, welche Steuerkammer (9) über einen Drosselkanal (10) mit der Gaseintrittsöffnung (3) verbunden ist, wobei wenigstens ein Teil der anderen Seite der Membran (7) mit der Gaseintrittsöffnung (3) in Verbindung steht und wobei Mittel (11) vorgesehen sind, die dem Gas einen Austritt aus der Steuerkammer (9) gestatten zum Öffnen des Gasventils, indem der Gasdruck von der Gaseintrittsöffnung (3) auf besagter anderen Seite der Membran (7) den Ventilkörper (5,7) vom Ventilsitz (6) wegbewegt, wobei besagter Ventilkörper (5,7) weiter ein Ventilglied (5) umfaßt, das in Bezug auf besagte Membran (7) zentral positioniert ist und das mit dem Ventilsitz (6) abdichtend in Eingriff steht, und wobei die Dimension des besagten Ventilglieds (5) so bemessen ist, daß der Abstand zwischen dem Teil des Ventilglieds (5), der mit dem Ventilsitz (6) in Eingriff steht, und dem Teil, der nahe der Membran (7) angeordnet ist, größer ist als der halbe Innendurchmesser der Gaseintrittsöffnung (3), gekennzeichnet dadurch, daß fast das gesamte Ventilglied (5) auf der besagten anderen Seite der Membran (7) angeordnet ist und daß besagter Ventilkörper (5,7), der besagte Membrane (7) umfaßt, sowie besagtes Ventilglied (5) als ein Ganzes aus dem gleichen Material hergestellt ist.

2. Ein Gasventil gemäß Anspruch 1, dadurch gekennzeichnet, daß besagter Ventilkörper (5,7) im wesentlichen stromaufwärts von besagtem Ventilsitz (6) positioniert ist.

3. Ein Gasventil gemäß einem der vorausgehenden Ansprüche, dadurch gekennzeichnet, daß Führungsmittel (8), welche die Bewegung des besagten Ventilglieds (5) führen, nahe des Ventilsitzes (6) vorgesehen sind.

4. Ein Gasventil gemäß einem der vorausgehenden Ansprüche, dadurch gekennzeichnet, daß besagte Membrane (7) wenigstens zum einem Teil im wesentlichen in Gestalt eines Konus vorgeformt ist in einer Weise, daß die Membran (7) eine im wesentlichen stabile Form in der Position aufweist, in der das Ventil geschlossen oder im wesentlichen geschlossen ist.

5. Ein Gasventil gemäß einem der vorausgehenden Ansprüche, dadurch gekennzeichnet, daß die Außenkante der besagten Membran (7) mit wenigstens einer Rippe (21) versehen ist, die sich parallel zu besagter Außenkante erstreckt.

6. Ein Gasventil gemäß Anspruch 5, dadurch gekennzeichnet, daß sich die Rippe (21) auf beiden Seiten der besagten Membran (7) erstreckt und im Querschnitt gesehen nach der Außenseite verjüngt.

7. Ein Gasventil gemäß einem der vorausgehenden Ansprüche, dadurch gekennzeichnet, daß besagte Membrane (7) zwischen zwei Teilen (1,2) des besagten Ventilgehäuses (1,2) nahe ihrer Außenkante befestigt ist, wobei wenigstens ein Teil des besagten Gehäuses mit einer im wesentlichen kreisförmigen Kante (13,14) versehen ist, die eine Rille in die Oberfläche der Membran (7) drückt.

8. Ein Gasventil gemäß Anspruch 7, dadurch gekennzeichnet, daß besagte zwei Teile (1,2) des besagten Ventilgehäuses mittels einer Klemmverbindung (15,16,17) verbunden sind.

9. Ein Gasventil gemäß Anspruch 8, dadurch gekennzeichnet, daß der besagte eine Teil (1) des besagten Ventilgehäuses eine Anzahl von Segmenten einer nach außen gerichteten kreisförmigen Nut (16) aufweist, in die eine im wesentlichen kreisförmige Sprungfederklemme (15) eingepaßt ist, während der andere Teil (2) des besagten Ventilgehäuses eine entsprechende Anzahl von Segmenten einer kreisförmigen Kante (17) umfaßt, die hinter die Klemme (15) zwischen den Teilen der Nut (16) eingreifen.

## Revendications

1. Soupape à gaz comprenant un boîtier de soupape (1, 2), comportant une entrée de gaz (3) et une sortie de gaz (4), et comprenant un corps de soupape (5, 7) qui est disposé à l'intérieur du boîtier (1, 2) et qui est susceptible de venir en butée contre un siège de soupape (6), de façon à obturer la soupape à gaz, dans laquelle ledit corps de soupape (5, 7) comprend une membrane (7) qui est fixée dans le boîtier de soupape (1, 2) à son bord extérieur, de telle façon qu'une chambre de commande est formée à ce premier côté qui est éloigné du siège de soupape (6), laquelle chambre de commande (9) est connectée à l'entrée de gaz (3) via un canal d'étranglement (10), dans laquelle au moins une partie de l'autre côté de la membrane (7) est en communication avec l'entrée de gaz (3), et dans laquelle des moyens (11) sont prévus pour permettre au gaz de s'échapper de la chambre de commande (9), de façon à ouvrir la soupape à gaz, en ce que la pression de gaz provenant de l'entrée de gaz (3) sur ledit autre côté de la membrane (7) provoque l'éloignement du corps de soupape (5, 7) du siège de soupape (6), dans laquelle ledit corps de soupape (5, 7) comprend en outre un organe de soupape (5) qui est positionné centralement par rapport à ladite membrane (7), lequel organe de soupape (5) s'ajuste de façon étanche au siège de soupape (6), et dans laquelle la dimension de l'organe de soupape (5) est telle que la distance entre la partie de l'organe de soupape (5) qui s'ajuste avec le siège de soupape (6) et la partie située proche de la membrane (7) est plus grande que la moitié du diamètre interne de l'entrée de gaz (3), caractérisée en ce que presque tout l'organe de soupape (5) est positionné sur ledit autre côté de la membrane (7), et en ce que ledit corps de soupape (5, 7) qui comprend ladite membrane (7) aussi bien que ledit organe de soupape (5) est fabriqué intégralement à partir du même matériau.

2. Soupape à gaz selon la revendication 1, caractérisée en ce que ledit corps de soupape (5, 7) est positionné sensiblement en amont dudit siège de soupape (6).

3. Soupape à gaz selon l'une quelconque des revendications précédentes, caractérisée en ce que des moyens de guidage (8), qui guident le mouvement dudit organe de soupape (5), sont prévus proches dudit siège de soupape (6).

4. Soupape à gaz selon l'une quelconque des revendications précédentes, caractérisée en ce que ladite membrane (7) est sensiblement préformée sous la forme d'un cône, au moins partiellement, de telle façon que ladite membrane (7) a une forme sensiblement stable dans la position dans laquelle la soupape est fermée, ou sensiblement fermée.

5. Soupape à gaz selon l'une quelconque des revendications précédentes, caractérisée en ce que le côté extérieur de ladite membrane (7) est pourvu d'au moins une nervure (21) s'étendant parallèlement audit bord.

6. Soupape à gaz selon la revendication 5, caractérisée en ce que des nervures (21) s'étendent sur chaque côté de ladite membrane (7) et vont en diminuant vers l'extérieur, vues en coupe transversale.

7. Soupape à gaz selon l'une quelconque des revendications précédentes, caractérisée en ce que ladite membrane (7) est fixée entre deux parties (1, 2) dudit boîtier de soupape au voisinage de son bord extérieur, grâce à quoi au moins une partie dudit boîtier est pourvue d'un bord sensiblement circulaire (13, 14) qui presse une gorge à l'intérieur de la surface de la membrane (7).

8. Soupape à gaz selon la revendication 7, caractérisée en ce que lesdites deux parties (1, 2) dudit boîtier de soupape sont interconnectées au moyen d'une connexion à clip (15, 16, 17).

9. Soupape à gaz selon la revendication 8, caractérisée en ce que ladite première partie (1) du boîtier de soupape comprend un certain nombre de segments d'une gorge circulaire (16) formée vers l'extérieur, dans laquelle est ajusté un clip ressort sensiblement circulaire (15), tandis que l'autre partie (2) du boîtier de soupape comprend un nombre correspondant de segments d'un bord circulaire (17) qui s'engage derrière le clip (15) entre les parties de la gorge (16).
